# EUROPÄISCHE PATENTSCHRIFT

(11) **EP 1 294 462 B1**
(45) Veröffentlichungstag und Bekanntmachung des Hinweises auf die Patenterteilung: **19.01.2005**
(21) Anmeldenummer: 01949438.4
(22) Anmeldetag: 26.06.2001
(51) Int. Cl.: B01D 25/26

(54) **FILTERMODUL**
FILTER MODULE
MODULE FILTRANT

(30) Priorität: 26.06.2000 DE 10029960
(43) Veröffentlichungstag der Anmeldung: 26.03.2003
(73) Patentinhaber: Pall Corporation, East Hills, New York 11548 (US)
(72) Erfinder: DIEMER, Wolfgang, 73550 Waldstetten (DE); ZEILER, Martin, 73527 Schwäbisch Gmünd (DE); SCHNIEDER, Georg, 55545 Bad Kreuznach (DE); STROHM, Gerhard, 55278 Dexheim (DE)
(74) Vertreter: Fuchs Mehler Weiss & Fritzsche
(86) Internationale Anmeldenummer: PCT/EP2001/007277
(87) Internationale Veröffentlichungsnummer: WO 2002/000320

(56) Entgegenhaltungen:
- WO-A-00/35555
- DE-A- 3 239 687
- DE-A- 19 837 257
- US-A- 3 647 084
- US-A- 5 549 824

## Beschreibung

Die Erfindung betrifft ein Filtermodul mit Filterlagen aus einem Filtermedium, insbesondere mit Filterlagen aus Filterschichten, die sich mit Lagen aus drainierenden Abstandselementen abwechseln, wobei die drainierenden Abstandselemente jeweils wechselseitig zum Filtrat- und Unfiltratraum einerseits Durchflusselemente und andererseits Dichtelemente aufweisen, zwischen denen Drainageelemente vorgesehen sind, wobei mindestens einige der Abstandselemente im Bereich mindestens eines Filtrat- oder Unfiltratraumes Verbindungsmittel aufweisen, wobei die Verbindungsmittel dieser Abstandselemente mit den Verbindungsmitteln mindestens eines weiteren Abstandselementes zusammenwirken und die drainierenden Abstandselemente zum abdichtenden Pressen der Filterlagen ausgebildet sind.

Solche Filtermodule sind in vielfältigen Bauformen bekannt, wobei der Mehrheit dieser Filtermodule gemeinsam ist, daß die Filterlagen aus ebenen Materialien, wie z.B. Filterkartons, Papieren, Vliesen oder Geweben hergestellt sind.

Filterschichten bestehen in der Regel aus Tiefenfiltermaterial, das organische und/oder anorganische fasrige, und/oder körnige Stoffe aufweist. Als Basismaterial für Filterschichten werden in der Regel Zellulose oder Kunststofffasern verwendet, in die beispielsweise Kieselgur, Perlite oder Metalloxide oder andere filtrationsaktive Substanzen eingelagert werden können. Hierbei dienen Kieselgur und Perlite zur Vergrößerung der inneren Oberfläche und damit zur Vergrößerung des Trubaufnahmevermögens.

Der Einsatzbereich der Filterschichten reicht von der Klärung und Behandlung von Flüssigkeiten der gesamten Getränkeindustrie bis in den Pharmabereich und die chemische Industrie. Filterschichten weisen nicht nur eine Siebwirkung auf, mit der grobe Teilchen auf der Oberfläche der Filterschicht zurückgehalten werden, sondern insbesondere auch eine Tiefenwirkung für feine Teilchen auf, die in den Hohlräumen innerhalb des Tiefenfiltermaterials zurückgehalten werden. Je nach Art der verwendeten Materialien können diese Filterschichten auch eine Adsorptionswirkung aufweisen und für bestimmte Anwendungszwecke kann die Oberfläche nachbehandelt sein, damit sich im trockenen und feuchten Zustand keine fasrigen Teilchen ablösen können.

Aus der US 4,347,208 ist ein Filtermodul aus Filterzellen bekannt, deren Kern aus einem drainierenden Spacer aus Kunststoff besteht, auf dem beidseitig eine Filterlage aus Filtermedium in Form von flachen Scheiben aufliegt. Im Zentrum der Filterzelle ist eine Filtratöffnung vorgesehen. Derartige Filterzellen müssen zur Abdichtung am äußeren Rand mit einem Kunststoffmaterial umspritzt werden, was aufwendig und kostspielig ist, weil hierfür spezielle Formen verwendet werden müssen, die an die Geometrie der Filterzelle angepaßt sein müssen. Die Abdichtung der Filterzelle gegenüber dem Unfiltratraum erfolgt durch Zusammenpressen der beiden nur am Randbereich aufeinanderliegenden Filtermateriallagen und Ausbilden eines U-förmigen den Randbereich umgreifenden Kunststoffelementes.

In der EP 0 233 999 wird ebenfalls ein solcher Filtermodul beschrieben, bei dem zwischen den Filterzellen zusätzlich sogenannte äußere Spacer angeordnet sind, die die Filterzellen auf Abstand halten, um eine Beschädigung, Kollabierung oder Aufquellen der Filterzellen zu vermeiden. Außerdem soll der radiale Fluß zwischen den Filterzellen verbessert werden. Die inneren und äußeren Spacer sind unterschiedlich ausgestaltet, so daß zur Herstellung verschiedene Werkzeuge benötigt werden. Auch bei diesem Filtermodul werden umspritzte Filterzellen benutzt.

Ein Filtermodul aus aufeinandergestapelten Filterzellen ist der EP 0 291 883 A3 zu entnehmen. Zur Fertigung des beschriebenen Moduls werden Filtertaschen mit innenliegendem Drainagematerial hergestellt, die von einem Dichtelement und einer Kunststoffmasse leckdicht umschlossen sind. Die Taschen werden anschließend so aufeinandergestapelt, daß das Fluid zwischen die Zellen dringen kann. Auch bei diesem Filtermodul sind zusätzliche Bauteile für die beabstandete Anordnung der Filterschichten erforderlich. Die Strömung durch den Filtermodul erfolgt in der Ebene der Filterschichten, die dann allerdings senkrecht zur Schichtebene durchströmt werden müssen, um die Filtration zu bewirken. Diese Filterzellen sind ohne besondere Maßnahmen nicht rückspülbar.

Ein weiterer Filtermodul ist aus der DE 37 41 552 A1 bekannt. Der Filtermodul, in welchem eine Anzahl von Filterzellen vereinigt ist, wird mit einem zentralen Trägerrohr ausgestattet, auf dem Filterzellen zwischen zwei an den beiden Enden des Trägerrohrs fest angebrachten Adapterstücken axial zusammengedrückt und gegeneinander abgedichtet gehalten sind. Das Innere des Trägerrohres steht über in der Umfangswand des Trägerrohrs angebrachte Durchlässe mit einem Innenraum jeder der Filterzellen in Verbindung und bildet so für sämtliche Filterzellen einen gemeinsamen Abführkanal für das Filtrat.

Wegen der fehlenden Rückspülbarkeit mancher Module wurde in jüngster Zeit zu einer spaltfreien Anordnung von Filterschichten übergegangen.

Aus der 198 36 949.2-27 ist ein Filtermodul mit Sammler-/Verteilerschichten für das Filtrat und das Unfiltrat bekannt, zwischen denen jeweils mindestens eine Filterschicht aus Tiefenfiltermaterial angeordnet ist. Sowohl die Filterschichten als auch die Sammler-/Verteilerschichten sind aus demselben Basismaterial gefertigt und weisen unterschiedliche Abscheidegrade auf. Die Sammler-/Verteilerschichten sind wechselseitig zum Filtrat-/Unfiltratraum abgedichtet. Die Dichtelemente können aus Formteilen bestehen, die Mittel zum gegenseitigen Verbinden aufweisen.

Aus der DE 198 37 257 A1 ist ein gattungsgemäßes Filtermodul bekannt, das Lagen aus einem Filtermedium aufweist, zwischen denen drainierende Abstandselemente angeordnet sind. Die drainierenden Abstandselemente sind ebenfalls wechselseitig zum Filtrat-/Unfiltratraum abgedichtet. Ferner weisen die drainierenden Schichten ebenfalls wechselseitig Durchflußelemente auf, die einen massiven Rahmen mit in der Ebene der drainierenden Schichten liegenden Bohrung oder Nuten umfaßt. Die Dichtelemente und/oder die Durchflußelemente weisen Mittel zum gegenseitigen Verbinden auf, wobei allerdings entweder die Durchfluß- oder die Dichtelemente miteinander verbunden werden können.

Die drainierenden Abstandselemente sind mit Dichtelement und Durchflußelement einteilig ausgeführt, wodurch kostengünstige Bauteile gefertigt werden können, die lediglich mit den Filterschichten kombiniert und zusammengefügt werden brauchen. Da die Durchfluß- und Dichtelemente dieselbe Dicke wie die drainierenden Abstandselemente aufweisen, werden die Filterschichten beim Zusammenbauen des Filtermoduls nicht im Randbereich komprimiert, so daß Bypässe in diesem Bereich nicht ausgeschlossen werden können. Die Filterschichten sind im seitlichen Randbereich zur Durchströmung offen.

Die Verbindungsmittel dienen nur dazu, das gesamte Modul zu fixieren, ohne daß dadurch die Abdichtung verbessert wird.

Aufgabe der Erfindung ist ein Filtermodul, das die Vorteile dieses bekannten Filtermoduls mit einer verbesserten Abdichtung im Randbereich verbindet und das rückspülbar ist bzw. in beliebiger Strömungsrichtung gefahren werden kann.

Diese Aufgabe wird mit einem Filtermodul gelöst, das dadurch gekennzeichnet ist, dass erste drainierende und zweite drainierende Abstandselemente vorgesehen sind, die verschieden ausgebildet und im Filtermodul abwechselnd angeordnet sind und jeweils wechselseitig zum Filtrat- und Unfiltratraum einerseits Durchflusselemente und andererseits Dichtelemente aufweisen, wobei die Dichtelemente und die Durchflusselemente der ersten drainierenden Abstandselemente dicker ausgebildet sind als die Dicht- und Durchflusselemente der zweiten drainierenden Abstandselemente und wobei zwischen den Drainageelementen der ersten drainierenden Abstandselemente und den benachbarten Filterlagen ein spaltförmiger Zwischenraum vorgesehen ist.

Unter den Filtrat- und Unfiltraträumen werden der den Filtermodul umgebende Raum und der oder die sich in Achsrichtung des Filtermoduls erstreckenden Sammelkanäle für Filtrat oder Unfiltrat verstanden. Üblicherweise besitzt der Filtermodul einen mittig angeordneten Filtrat-/Unfiltratraum, es sind aber auch mehrere solcher sich durch den Filtermodul erstreckender Filtrat-/Unfiltraträume möglich.

Dieser Filtermodul besitzt eine Reihe von Vorteilen.

Durch die flächige Auflage der Filterlagen auf den drainierenden Abstandselementen, wobei die Filterlagen im Randbereich zwischen den Abstandselementen eingespannt sind, und durch die gegenseitige Verbindung der drainierenden Abstandselemente über Verbindungsmittel wird ein insgesamt stabiler Filtermodul geschaffen, der sich nicht verziehen kann und der dadurch auch rückspülbar ist. Eine Deformation der Filterlagen während des Rückspülens wird wirksam verhindert.

Dadurch, daß die drainierenden Abstandselemente beidseitig an den Filterlagen angeordnet sind und somit die Filterlagen beidseitig gestützt werden, können für die Filtration auch Filtermaterialien verwendet werden, die gegebenenfalls eine geringere Eigensteifigkeit aufweisen.

Durch die starre Verbindung, insbesondere am Außenrand, wird ein formstabiler Filtermodul geschaffen, der sämtlichen Belastungen bei Lagerung, Auslieferung und im Einsatz standhält. Ferner wird eine Beschädigung der Filterlagen beim Ein- und Ausbau aus den Filtergehäusen vermieden. Wenn ringförmige Filterlagen eingesetzt werden, ist der Filtrat-/Unfiltratkanal in der Regel mittig angeordnet, wo die drainierenden Abstandselemente ebenfalls Verbindungselemente aufweisen können, wodurch die Stabilität zusätzlich erhöht wird.

Durch die erfindungsgemäßen Maßnahmen wird auch die Rückschlagfestigkeit des Filtermoduls deutlich verbessert, die beim Auftreten von Vakuumschlägen oder Druckstößen durch Schaltungsfehler von Bedeutung ist.

Da die Verbindung der drainierenden Abstandselemente untereinander erfolgt, kann die Bauhöhe des Filtermoduls beliebig gewählt werden. Ferner können die Durchmesser der Filterlagen und der drainierenden Abstandselemente an die Durchmesser von herkömmlichen Filtergehäusen angepaßt werden, so daß eine Verwendung in den bekannten Filtergehäusen problemlos ohne Einbuße von wirksamer Filterfläche möglich ist.

Während bei den herkömmlichen Filterzellen ein Verkleben der Filterlagen im Bauchbereich der Filterzellen nicht verhindert werden kann, tritt dieses Problem aufgrund der beidseitig der Filterlagen vorhandenen drainierenden Abstandselemente nicht auf. Die Filterlagen werden optimal ausgenutzt und dies insbesondere auch bei geringem Differenzdruck.

Darüber hinaus ist die Filtration in beiden Richtungen möglich, d.h. der Modul kann auch in umgekehrter Strömungsrichtung betrieben werden. Es kann somit auch eine absolute Restfiltration durchgeführt werden, d.h. nach der Filtration befindet sich kein Unfiltrat mehr im Gehäuse. Dies ist insbesondere für die Filtration von teuren Lösungen von Bedeutung. Eine Reinigung des Filtergehäuses nach der Filtration von beispielsweise giftigen Flüssigkeiten kann entfallen, so daß eine Berührung mit toxischen Stoffen vermieden werden kann.

Die oberste und unterste Filterlage des Filtermoduls kann beispielsweise mit nicht drainierenden Abstandselementen abgeschlossen werden. Es ist auch möglich, als oberen und unteren Abschluß herkömmliche Filterzellen einzusetzen, die am umspritzten Außenrand Verbindungsmittel aufweisen.

Vorzugsweise wirken die Verbindungsmittel benachbarter Abstandselemente zusammen. Es besteht aber auch die Möglichkeit, daß die Verbindungsmittel jeweils ein oder mehrere der benachbarten Abstandselemente übergreifen und erst mit den Verbindungsmitteln eines oder mehrerer der folgenden Abstandselemente zusammenwirken.

Vorzugsweise umfaßt das Abstandselement ein Drainageelement, mindestens ein Dichtelement und/oder ein Durchflußelement. Die Anzahl der Dicht- bzw. Durchflußelemente richtet sich nach der Anzahl der Filtrat- bzw. Unfiltraträume, an die das jeweilige Abstandselement angrenzt.

Vorzugsweise weist das erste Abstandselement das Dichtelement am Innenumfang und das zweite Abstandselement das Dichtelement am Außenumfang auf.

Vorzugsweise sind die Dichtelemente und die Durchflußelemente der ersten drainierenden Abstandselemente dicker ausgebildet als die Dicht- und die Durchflußelemente der zweiten drainierenden Abstandselemente. Dadurch bildet sich je nach Dicke der Filterlage nach dem Zusammenbau des Filtermoduls zwischen dem ersten drainierenden Abstandselement und der Filterlage in dem nicht eingespannten Bereich ein mehr oder weniger breiter Spalt aus.

Vorzugsweise weist das erste Abstandselement zwischen dem Drainageelement und dem Dichtelement bzw. dem Durchflußelement jeweils ein inneres keilförmiges Verbindungselement und/oder ein äußeres keilförmiges Verbindungselement auf.

Das oder die keilförmigen Verbindungselemente weisen mindestens eine obere und mindestens eine untere Keilfläche mit Neigungswinkeln zwischen 10° und 60° auf. Die keilförmigen Verbindungselemente weisen vorzugsweise eine Dicke auf, die dem Dichtelement bzw. dem Durchflußelement entspricht und verjüngen sich radial bis auf die Dicke des Drainageelementes. Dadurch wird ein kontinuierlicher Übergang zwischen Dichtelement bzw. Durchflußelement und Drainageelement geschaffen, was hinsichtlich der Abdichtung vorteilhaft ist. Die Filterschicht wird beim Zusammenbau mit den zweiten Abstandselementen zum Randbereich der Abstandselemente hin kontinuierlich komprimiert, so daß die Filterschicht keinen unkontrollierten Deformationen ausgesetzt ist, die möglicherweise zu Bypässen führen könnte.

Die keilförmigen Verbindungselemente weisen vorzugsweise jeweils zwei Keilflächen auf, wobei die Keilfläche im Bereich x<1 mm einen Neigungswinkel α₁ von 40 - 60°, vorzugsweise 45°, und die zweite Keilfläche im angrenzenden Bereich von α₂ < 20° aufweist.

Das Drainageelement ist vorteilhafterweise mit dem Dichtelement und/oder dem Durchflußelement und/oder dem keilförmigen Verbindungselement einstückig ausgebildet, so daß beispielsweise ein einteiliges Kunststoffspritzteil gefertigt werden kann.

Eine weitere Vereinfachung wird dadurch erreicht, daß die Verbindungsmittel ebenfalls einstückig mit dem Abstandselement ausgebildet sind.

Die Verbindungsmittel greifen erst dann ineinander, wenn die Abstandselemente und die Filterlagen nach dem Zusammenbauen zu einem Filtermodul zusammengedrückt werden. Hierbei werden durch die drainierenden Abstandselemente die Filterlagen abdichtend zusammengepreßt. Nach dem Wegnehmen des Montagedrucks und nach dem Zusammenwirken der Verbindungsmittel müssen diese entsprechende Zugkräfte aushalten. Vorzugsweise sind die Verbindungsmittel daher derart bemessen, daß sie eine Zugspannung aushalten, die einem Klemmdruck für das abdichtende Pressen der Filterlagen zwischen 1 N/mm² und 100 N/mm², vorzugsweise 2 N/mm² bis 30 N/mm² entspricht.

Die Verbindungsmittel können auf verschiedene Art und Weise ausgeführt sein. Vorzugsweise wirken die Verbindungsmittel der Abstandselemente formschlüssig zusammen. Eine andere Ausführungsform sieht vor, daß die Verbindungsmittel der Abstandselemente kraftschlüssig zusammenwirken.

Da die Abstandselemente an ihren Randbereichen Durchfluß- bzw. Dichtelemente aufweisen, sind die Verbindungsmittel vorzugsweise an den Durchfluß- bzw. Dichtelementen angeordnet, insbesondere angeformt, wenn es sich um eine einstückige Ausführungsform handelt.

Vorteilhafterweise umfassen die Verbindungselemente Bügel, in die Rastnasen eingreifen. Die Bügel können beispielsweise U- oder L-förmig ausgeführt sein.

Die Bügel sind sowohl nach oben als auch nach unten weisend angeordnet. Eine alternierende Anordnung von nach oben und nach unten weisenden Bügeln ist bevorzugt.

Um eine möglichst starre Moduleinheit zu schaffen, sind die Bügel in Umfangsrichtung der Abstandselemente vorzugsweise unmittelbar nebeneinander angeordnet.

Die Bügel können gemäß einer weiteren bevorzugten Ausführungsform auch mit Abstand zueinander in Umfangsrichtung des Abstandselementes angeordnet sein, wobei der Abstand nur maximal 500 mm betragen darf. Die Verbindungselemente sind gleichmäßig über den Umfang verteilt, wobei die Anzahl vom Umfangsmaß abhängt. Die Verbindungsmittel, insbesondere die Bügel, dienen auch als Schutz gegen Einwirkungen auf den eingespannten Filterlagenrand in radialer Richtung.

Eine weitere Ausführungsform sieht vor, daß als Verbindungsmittel eine an einem Abstandselement ausgebildete umlaufende Nut und an einem anderen Abstandselement Rasthaken angeordnet sind, die in die Nut eingreifen. Die umlaufende Nut kann im Dichtelement des Abstandselementes oder im Durchflußelement angeordnet sein. Die Nut wird vorzugsweise durch Rastringe begrenzt.

Vorzugsweise weisen die Rastnasen, Rasthaken, Rastringe und/oder die Bügel an ihrer Außenseite Gleitschrägen auf. Dadurch wird das Zusammenfügen und Einrasten der Verbindungsmittel erleichtert. Beim Zusammenbauen des Filtermoduls werden die Filterlagen und die drainierenden Abstandselemente aufeinandergestapelt und anschließend wird das gesamte Paket zusammengedrückt, wobei die Bügel, Rastnasen usw. ineinandergreifen. Hierbei müssen die Verbindungsmittel jeweils die Außenflächen des Verbindungspartners überlaufen, wobei die Gleitschrägen diesen Vorgang erleichtern.

Um einen sicheren Halt zu gewährleisten, sind die Kontaktflächen der formschlüssigen Verbindungsmittel vorzugsweise geneigt angeordnet, wobei vorteilhafterweise die jeweils übergreifende Kontaktfläche in Gegenrichtung zum umgriffenen Verbindungsmittel nach innen geneigt ist. Es wird dadurch eine clipsartige Verbindung geschaffen.

Weitere Ausführungsformen der Verbindungsmittel können Hülsen und eingreifende Dübel mit oder ohne Verzahnung, beidseitig ineinandergreifende T-förmige Rastelemente oder beidseitig ineinandergreifende pfeilförmige Rastelemente sein.

Gemäß einer weiteren Ausführungsform können an den Abstandselementen umlaufende Befestigungsmittel, wie z.B. Hakenkränze vorgesehen sein, an denen ein das Filtermodul umhüllendes Netz oder Gitter befestigt ist. Das Netz oder das Gitter dient bei dieser Ausführungsform ebenfalls als Verbindungsmittel, das die Abstandselemente und somit den Filtermodul zusammenhält.

Die Verbindungsmittel können ausschließlich am äußeren Umfang der Abstandselemente vorgesehen sein. Es ist aber auch möglich, daß die Verbindungsmittel außer am Außenumfang der Abstandselemente auch am Innenumfang der Abstandselemente angeordnet sind, wobei der Innenumfang den Randbereich meint, der die im Innern des Filtermoduls angeordneten Sammel- und somit Filtrat- bzw. Unfiltraträume begrenzt.

Vorzugsweise sind die Dicht- und/oder Durchflußelemente als wulstartige Verdickungen der drainierenden Abstandselemente ausgebildet.

Beispielhafte Ausführungsformen der Erfindung werden nachfolgend anhand der Zeichnungen näher erläutert.

Es zeigen:
- Fig. 1: eine perspektivische Darstellung des Filtermoduls,
- Fig. 2a: einen Teilschnitt durch den in Fig. 1 gezeigten Filtermodul längs der Linie A-A,
- Fig. 2b: einen Teilschnitt durch ein erstes drainierendes Abstandselement,
- Fig. 3 a: eine vergrößerte perspektivische Darstellung der Bügel,
- Fign. 3b,c: Draufsichten auf einen Abschnitt des Umfangsrandes eines Abstandselementes gemäß zweier Ausführungsformen,
- Fig. 4: einen Teilschnitt durch einen Filtermodul gemäß einer weiteren Ausführungsform,
- Fig. 5: eine Teildraufsicht auf den in Fig. 4 gezeigten Filtermodul,
- Fig. 6a,b: Draufsichten auf Sektoren der drainierenden Abstandselemente und
- Fig. 7: einen Teilschnitt durch einen Filtermodul gemäß einer weiteren Ausführungsform.

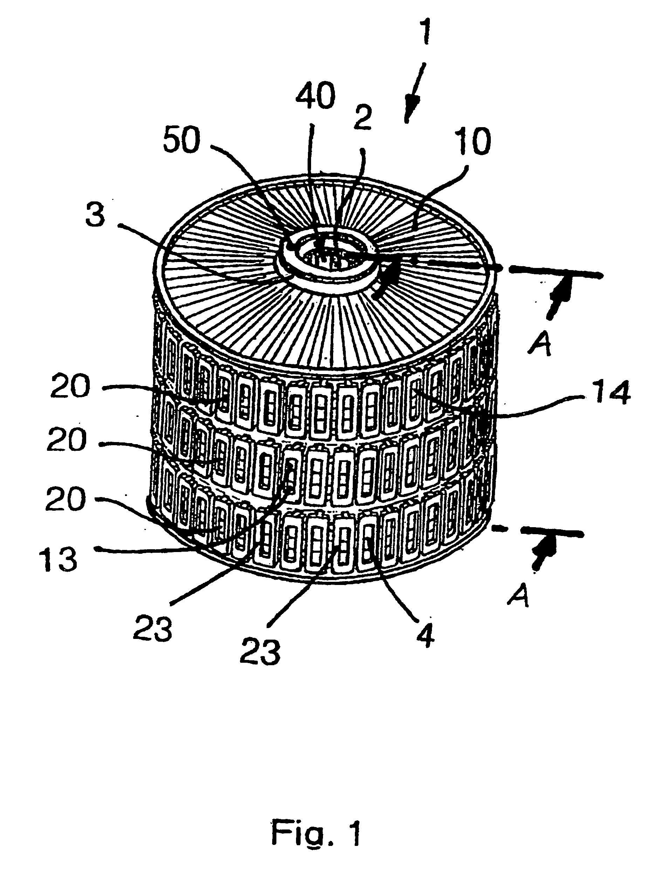

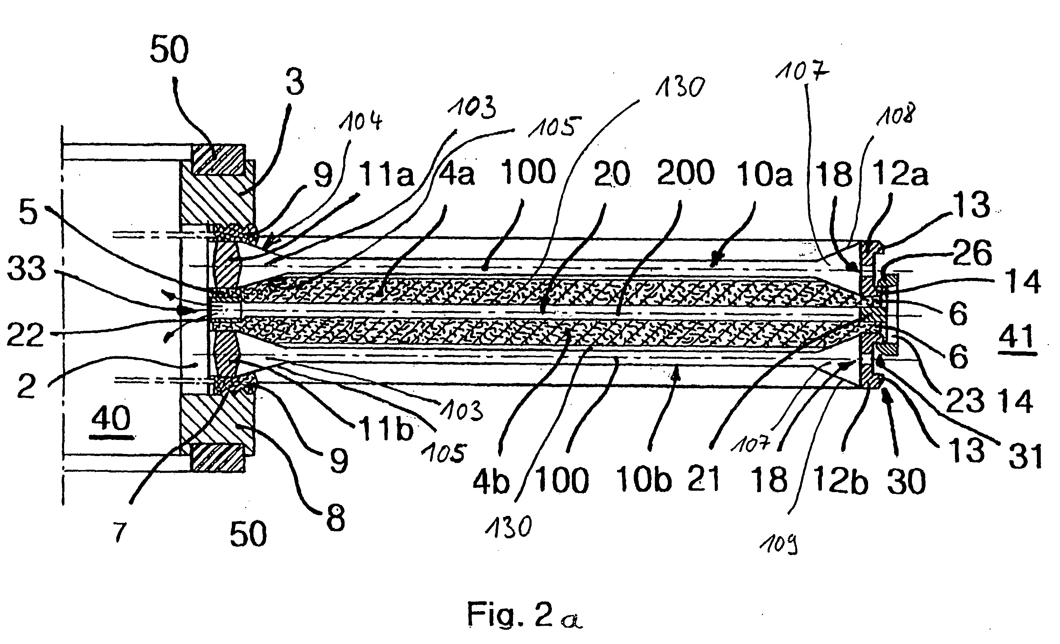

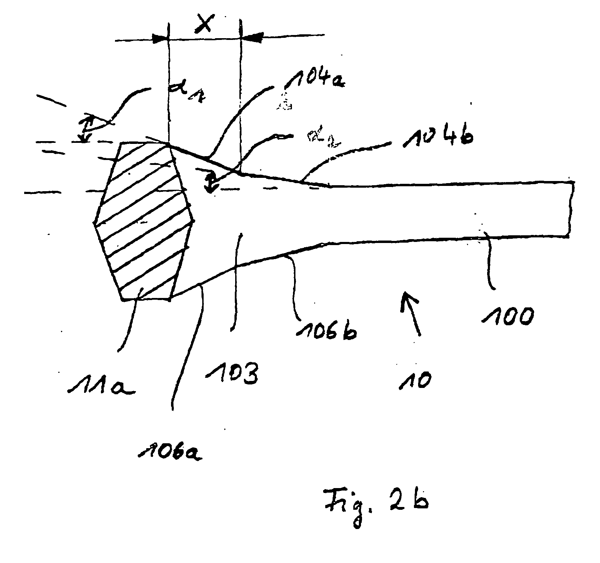

In der Fig. 1 ist ein vollständiger Filtermodul 1 perspektivisch dargestellt. Filterlagen in Form von Filterschichten 4 wechseln sich mit ersten und zweiten drainierenden Abstandselementen 10,20 ab. Sämtliche Bauteile des Filtermoduls 1 sind auf einem Zentralrohr 2 aufgereiht sind, das ein unteres Endstück 8 (s. Fig. 2) und ein oberes Endstück 3 aufweist, das die Filterschichten 4 und die drainierenden Abstandselemente 10,20 auf dem Zentralrohr 2 fixiert.

Die zweiten drainierenden Abstandselemente 20 weisen an ihrer Außenseite nach oben und nach unten weisende U-förmige Bügel 23 auf, in die Rastnasen 13,14 der ersten drainierenden Abstandselemente 10 eingreifen. Die Bügel 23 und die Rastnasen 13,14 bilden zusammen jeweils eine clipsartige Verbindung. In der in der Fig. 1 gezeigten Ausführungsform sind die Bügel lückenlos am Außenumfang angeordnet, so daß ein stabiler Filtermodul 1 geschaffen wird, der als Ganzes leicht handhabbar ist und der sich beim Einsatz nicht verziehen kann.

In der Fig. 2a ist ein Schnitt längs der Linie A-A durch den in Fig. 1 gezeigten Filtermodul 1 dargestellt. Der Einfachheit halber sind lediglich zwei Filterschichten 4a und 4b mit den dazugehörigen drainierenden Abstandselementen 10a,b und 20 eingezeichnet.

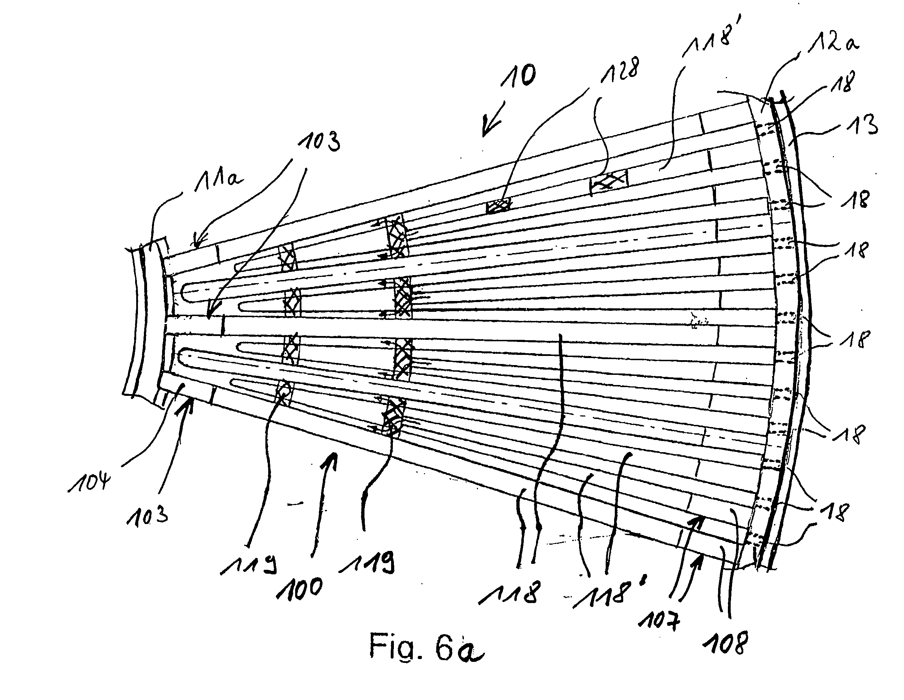

Die ersten drainierenden Abstandselemente 10a,b weisen ringförmige Dichtelemente 11a,11b auf, die in der hier gezeigten Ausführungsform einen sechseckigen Querschnitt aufweisen. Radial nach außen schließen sich über den Außenumfang der ringförmigen Dichtelemente 11a,11b verteilte innere keilförmige Verbindungselemente 103 an, die eine obere und eine untere Keilfläche 104,105 aufweisen. Diese keilförmigen Verbindungselemente 103 verjüngen sich radial nach außen, wobei die Dicke von der Dicke der Dichtelemente auf die Dicke des Drainageelementes 100 bzw. die Dicke der entsprechenden Stege 118,118' des Drainageelementes 100 abnimmt (s. auch Fig. 6a). Radial nach außen schließen sich an das Drainageelement 100 äußere keilförmige Verbindungselemente 107 mit oberen und unteren Keilflächen 108,109 an. Die keilförmigen Verbindungselemente 107 gehen in die Durchflußelemente 12a,12b über, die einen Ring bilden, dessen Dicke der Dicke des Dichtelementes 11a, 11b entspricht. An den Durchflußelementen 12a,b sind die Rastnasen 13 angeformt und mittig in den Durchflußelementen 12a,b sind die Durchflußkanäle 18 angeordnet. Die drainierenden Abstandselemente, die keilförmigen Verbindungselemente, die Dichtelemente und die Durchflußelemente sind einstückig ausgebildet, beispielsweise als Formteil aus Kunststoff.

Zwischen den Drainageelementen 100 und den jeweils benachbarten Filterschichten 4a,4b ist ein spaltförmiger Zwischenraum 130 vorgesehen, so daß die Filterschicht 4a,b in diesem Bereich keiner Belastung ausgesetzt ist und sich durch Quellung ungehindert ausdehnen kann. Dadurch wird die volle Funktionsfähigkeit und Wirksamkeit der Filterschicht 4a,b gewährleistet. Die Spaltbreite wird durch die Dicke der Filterschicht 4a,b bestimmt. Ohne die drainierenden Abstandselemente 10a,b,20 ändern zu müssen, können unterschiedlich dicke Filterlagen eingebaut werden. Wenn das Filtermodul in umgekehrter Strömungsrichtung betrieben wird, kann sich je nach Dicke der Filterschicht 4a,b der Spalt 130 schließen und sich zwischen dem Drainageelement 200 und der benachbarten Filterschicht oder Filterlage ein Spalt bilden.

Die keilförmigen Verbindungselemente bewirken beim Zusammenbau mit den zweiten drainierenden Abstandselementen 20 in radialer Richtung eine kontinuierliche Pressung der Filterschicht, wodurch eine verbesserte Abdichtung erzielt wird. Die zweiten drainierenden Abstandselemente 20 weisen ein ringförmiges Durchflußelement 22 mit Durchflußkanälen 33 auf. Das ringförmige Durchflußelement 22 weist eine größere Dicke auf als das sich radial nach außen anschließende Drainageelement 200, an das sich radial nach außen das ringförmige Dichtelement 21 anschließt. Auch das zweite drainierende Abstandselement 20 ist vorzugsweise einstückig aus Kunststoff hergestellt. An dem Dichtelement 21, das als Dichtring mit einer der Dicke des drainierenden Abstandselements 20 entsprechenden Dicke ausgebildet ist, sind an der Außenseite die Bügel 23 angeformt. Die Bügel 23 erstrecken sich sowohl nach oben als auch nach unten und besitzen an ihrer Innenseite Bügelnasen 26 und Kontaktflächen 27 und an ihrer Außenseite Gleitschrägen 30.

Die Filterschichten 4a,b und die Abstandselemente 10a,b,20 sind auf dem Zentralrohr 2 aufgereiht, an dem das untere Endstück 8 und das obere Endstück 3 befestigt sind. Diese Endstücke 3 und 8 tragen an ihrer Stirnseite ringförmige Dichtelemente 50, die als Flachdichtungen ausgebildet sind. Das Innere des Zentralrohrs 2 bildet den Filtrat-/Unfiltratkanal 40.

Zwischen den mit Domen 7 bestückten Endstücken 3 und 8 sind von oben nach unten folgende Bauteile eingespannt: Zwischenelement 9 aus Filtermaterial, Dichtelement 11a, Filterschicht 4a, Durchflußelement 22, Filterschicht 4b, Dichtelement 11b und Zwischenelement 9. Die Dichtelemente 11a und 11b sind beidseitig auf Grund der keilförmigen Verbindungselemente 103 als wulstartige Verdickungen der Drainageelemente 100 ausgebildet und besitzen in der hier gezeigten Ausführungsform einen sechseckigen Querschnitt. Die wulstartigen Dichtelemente 11a und 11b liegen dichtend einerseits am Zwischenelement 9 und andererseits am Innenrand 5 der Filterschicht 4a bzw. 4b an.

Auch das Durchflußelement 22, das mittels Durchflußkanälen 33 eine Verbindung zwischen dem Raum zwischen den Filterschichten 4a und 4b und dem Filtrat-/Unfiltratraum 40 herstellt, ist beidseitig als wulstartige Verdickung des zweiten drainierenden Abstandselementes 20 ausgeführt.

Beim Zusammenfügen der Bauteile zum Filtermodul 1 werden durch diese Ausgestaltung der Dichtelemente 11a und 11b und des Durchflußelements 22 die Filterschichten 4a und 4b am Innenrand 5 zusammengepreßt und abgedichtet, so daß Bypässe in diesem Bereich verhindert werden.

Am Außenumfang besitzt das zweite drainierende Abstandselement 20 ein Dichtelement 21, um eine Abdichtung gegenüber dem Umgebungsraum zu bilden, der den Filtrat-/Unfiltratraum 41 bildet.

Die Durchflußelemente 12a,b stellen die Verbindung zwischen dem Raum oberhalb bzw. unterhalb der Filterschichten 4a,4b und dem Filtrat- bzw. Unfiltratraum 41 dar. Ober- und unterhalb der Durchflußkanäle 18 sind Rastnasen 13,14 mit Gleitschrägen 31 angeordnet, die im zusammengebauten Zustand mit den Bügelnasen 26 zusammenwirken und eine clipsartige Verbindung bilden.

Zwischen dem Dichtelement 21 und den Durchflußelementen 22 wird der Außenrand 6 der Filterschichten 4a und 4b zusammengedrückt.

Die Pfeile zeigen die Fließrichtung des Unfiltrates bzw. Filtrates an. Das Unfiltrat wird aus dem Unfiltratraum 41 zugeführt und gelangt durch die Durchflußkanäle 18 an die Filterschichten 4a und 4b. Nach dem Durchtritt durch die Filterschichten 4a und 4b sammelt sich das Filtrat im Bereich des zweiten drainierenden Abstandselementes 20 und fließt durch dessen Durchflußelement 22 in den Filtratraum 40 im Inneren des Zentralrohres 7 ab. Die Fließrichtung kann auch umgekehrt werden. In diesem Fall bildet der Raum 40 den Unfiltratraum und der Raum 41 den Filtratraum.

In der Fig. 2b ist eine weitere Ausführungsform des keilförmigen Verbindungselementes 103 dargestellt. Anstelle einer einzigen Keilfläche sind an der Ober- und Unterseite jeweils zwei keilförmige Flächen 104a,b und 106a,b vorgesehen. Die Keilflächen 104a,106a sind stärker geneigt als die Keilflächen 104b,106b, die an das Drainageelement 100 angrenzen. Dies bedeutet, daß für die zugehörigen Winkel gilt α₁ > α₂. Das keilförmige Verbindungselement 107 (s. Fig. 2a) kann entsprechend ausgebildet sein.

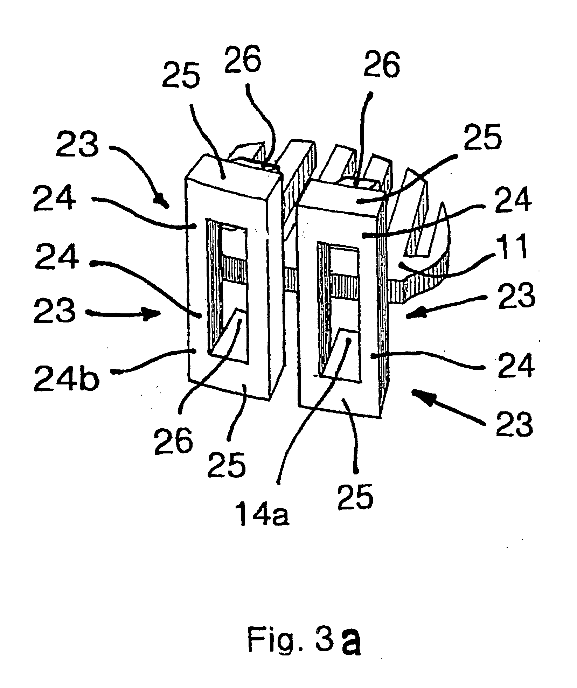

In der Fig. 3a sind vier Bügel 23 perspektivisch dargestellt. An dem ringförmigen Dichtelement 11 sind diese Bügel als U-förmige Bügel nach oben und nach unten weisend angeformt. Jeder Bügel 23 besitzt zwei vertikale Schenkel 24 und einen verbindenden Querschenkel 25, an dessen Rückseite jeweils eine Bügelnase 26 angeordnet ist.

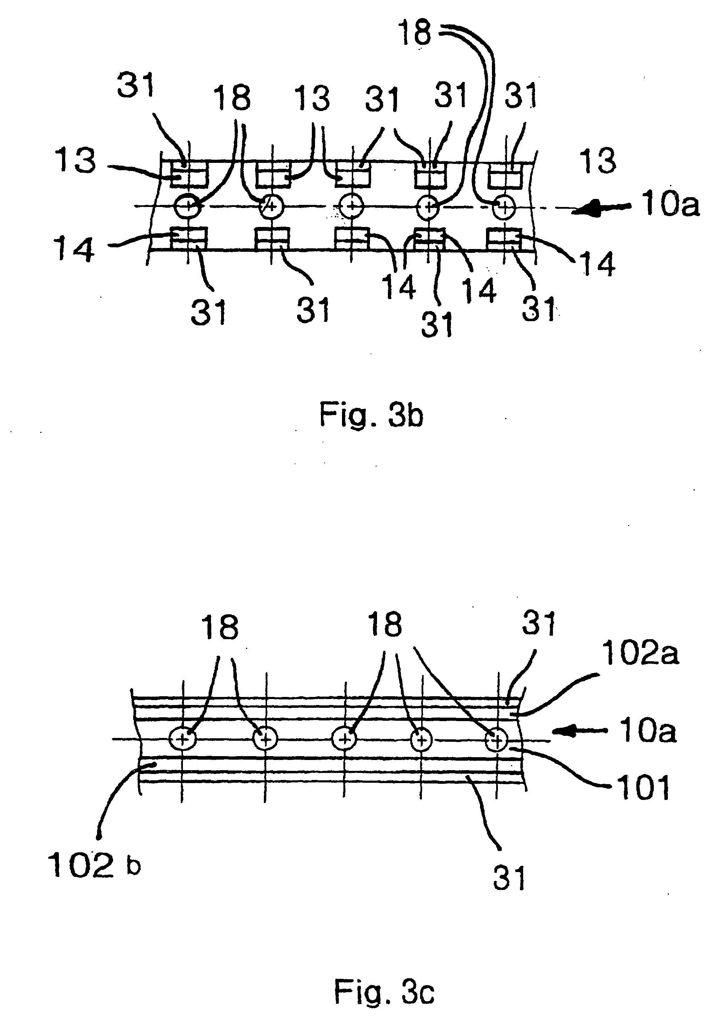

In der Fig. 3b ist die Draufsicht auf einen Abschnitt des Umfangsrandes eines drainierenden Abstandselementes 10a dargestellt. Mittig sind die Durchflußkanäle 18 angeordnet und ober- bzw. unterhalb der Durchflußkanäle 18 sind die Rastnasen 13 und 14 angeordnet, die gleichmäßig über den Umfangsrand mit Abstand verteilt sind. Die Rastnasen 13 bzw. 14 besitzen an ihrer Außenseite Gleitflächen 31.

In der Fig. 3c ist eine weitere Ausführungsform dargestellt, bei der anstelle von Rastnasen 13 bzw. 14 Rastringe 102a,102b vorgesehen sind, die eine dazwischenliegende Nut 101 begrenzen, in der die Durchflußkanäle 18 angeordnet sind. Es besteht auch die Möglichkeit, die in den Fign. 3b und 3c dargestellten Ausführungsformen anstelle an den Durchflußelementen auch an den Dichtelementen anzubringen.

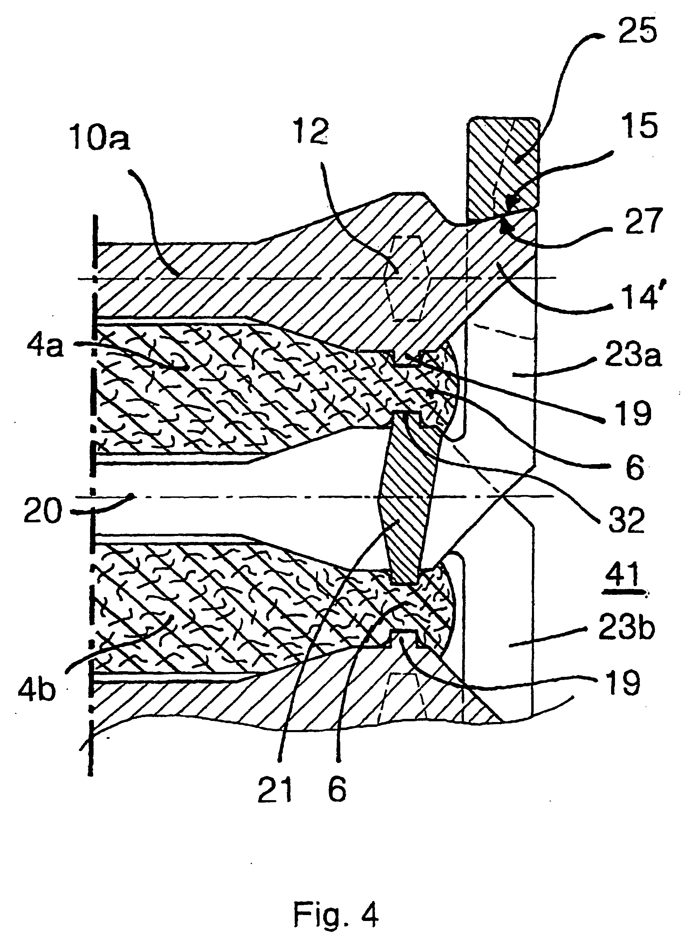

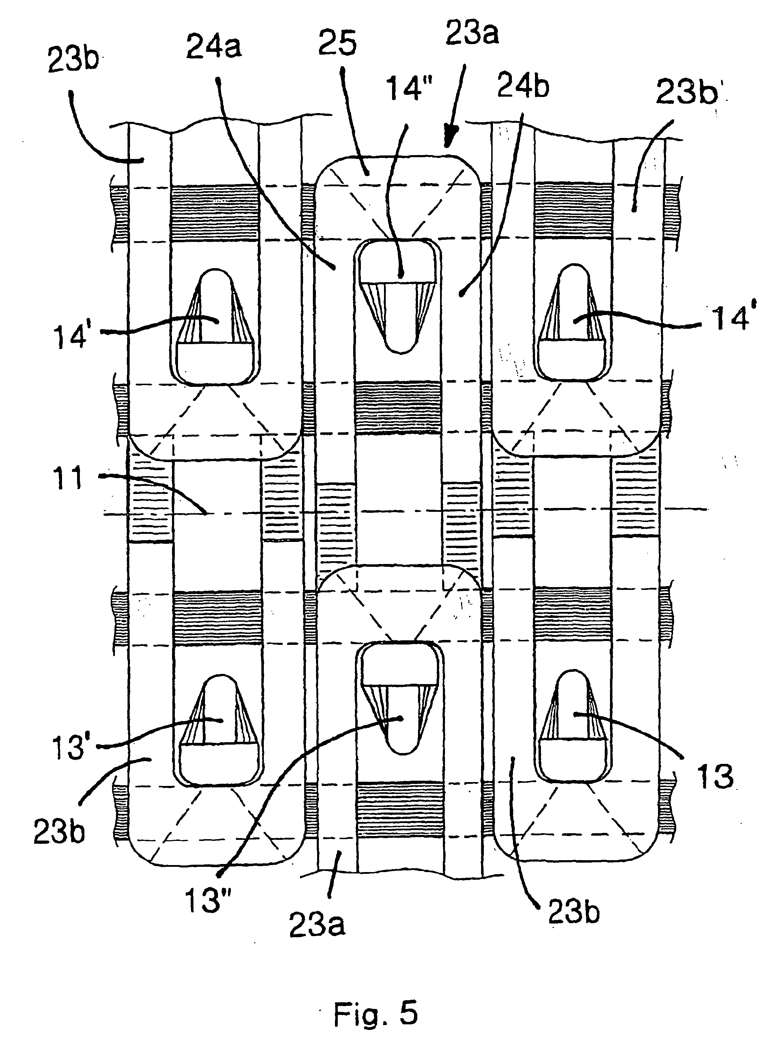

In der Fig. 4 ist eine weitere Ausführungsform dargestellt, bei der sowohl die Dichtelemente 21 als auch die Durchflußelemente 12 ringförmige Druckschultern 19 bzw. 32 aufweisen. An dem Dichtelement 21 sind die Bügel 23a,b alternierend nach oben und nach unten weisend angeordnet, wie dies aus der Fig. 5 zu entnehmen ist. Dementsprechend sind auch die Rastnasen 14',14" sowie 13',13" alternierend angeordnet. Die Kontaktfläche 15 der Rastnasen 14' und die Kontaktfläche 27 des Querschenkels 25 des Bügels 23a sind geneigt angeordnet, wobei die Kontaktfläche 15 nach innen geneigt ist (s. Fig. 4). Dadurch wird ein sicherer Halt gewährleistet, so daß die Bügel 23a bei Belastung nicht nach außen ausweichen können. Es wird somit ein clipsartiger Verschluß oder clipsartige Verbindung geschaffen.

In der Fig. 6a ist ein Sektor eines kreisförmigen ersten Abstandselementes 10 dargestellt. Am Innenumfang befindet sich das ringförmige Dichtelement 11a, an das sich radial nach außen die keilförmigen Verbindungselemente 103 mit den oberen Keilflächen 104 anschließen, die in die radialen Stege 118 des Drainageelementes 100 übergehen. Ferner sind verkürzte radiale Stege 118' vorgesehen, die sich von dem am Außenumfang des drainierenden Abstandselementes 10 angeordneten ringförmigen Durchflußelementes 12a nach innen erstrecken. Die radialen Stege 118,118' sind durch kreisförmige Stege 119 miteinander verbunden. Die rautierten Abschnitte der kreisförmigen Stege 118,118' sowie die Bereiche 128, die nur beispielhaft an einem Steg 118' eingezeichnet sind, weisen eine gegenüber den übrigen Stegen bzw. Stegabschnitten reduzierte Dicke auf, um gegebenenfalls eine Querströmung zu ermöglichen.

Am radial äußeren Ende weisen die Stege 118,118' keilförmige Verbindungselemente 107 auf, von denen die obere Keilfläche 108 zu sehen ist. Hieran schließt sich das ringförmige Durchflußelement 12a mit den Durchflußkanälen 18 und den Rastnasen 13 an.

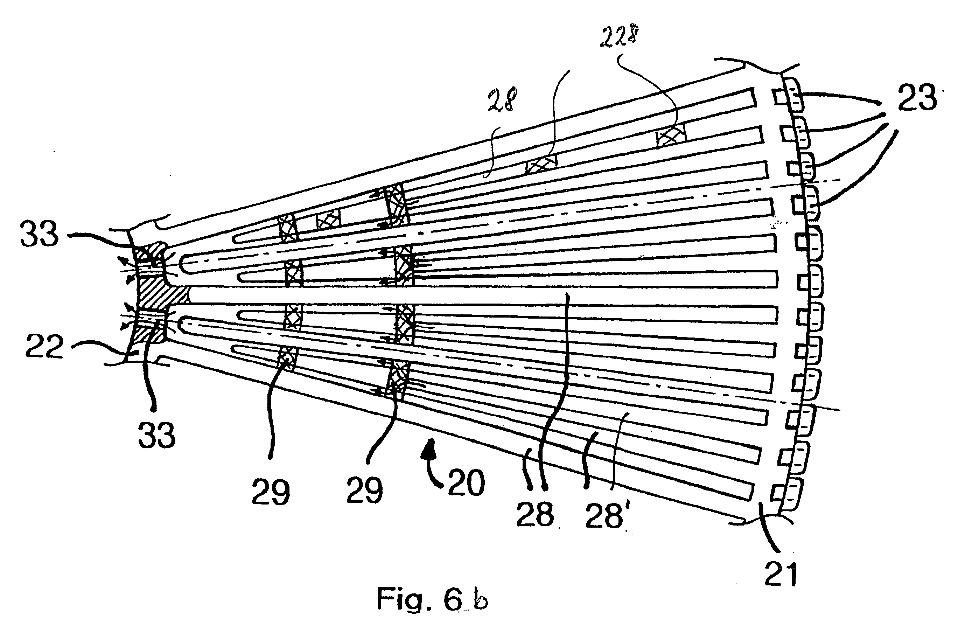

In der Fig. 6b ist ein Sektor eines kreisförmigen zweiten Abstandselementes 20 dargestellt. Am Außenumfang des ringförmigen Dichtelementes 21 sind die Bügel 23 angeformt. Am Innenumfang befindet sich das Durchflußelement 22 mit den Durchflußkanälen 33. Zwischen dem Durchflußelement 22 und dem Dichtelement 21 sind radiale Stege 28,28' und kreisförmige Stege 29 angeordnet, wobei durchgehende Stege 28 und verkürzte Stege 28' vorhanden sind. Der Abstand der radialen Stege 28,28' ist an das Filtermaterial angepaßt, um eine optimale Abstützung der Filterlage sowohl während der Filtration als auch während des Rückspülens zu gewährleisten. Breite, Länge und Anordnung der Stege 28,28' und 29 ist somit jeweils an das Filtermaterial und die Filtrationsaufgabe anzupassen. Die rautierten Abschnitte der kreisförmigen Stege 29 sowie die Bereiche 228, die nur beispielhaft an einem Steg 28 eingezeichnet sind, weisen eine gegenüber den übrigen Stegen und Stegabschnitten reduzierte Dicke auf, um gegebenenfalls eine Querströmung zu ermöglichen.

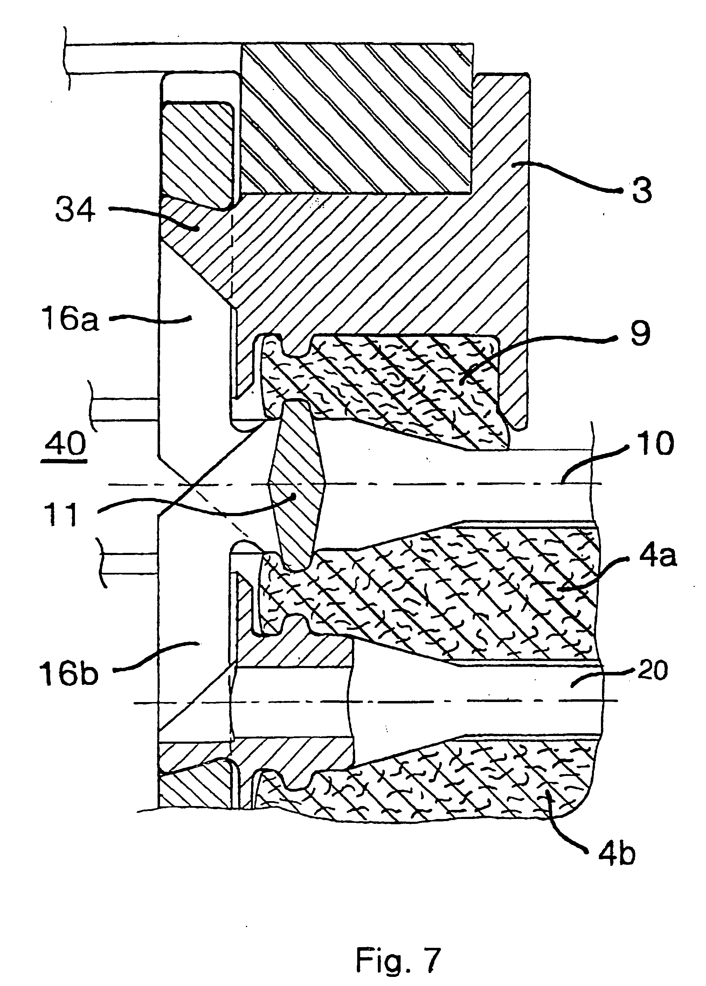

In der Fig. 7 ist eine weitere Ausführungsform dargestellt, die die Verbindung im Bereich des Filtrat-/Unfiltratkanals 40 zeigt. Auf ein Zentralrohr 2 wird bei dieser Ausführungsform verzichtet, weil die ersten drainierenden Abstandselemente 10 mit dem ringförmigen Dichtelement 11 Bügel 16a,b aufweisen, die mit entsprechenden Rastnasen 34 zusammenwirken, die entweder am oberen Endstück 3 oder an den zweiten drainierenden Abstandselementen 20 angeformt sind. Die ebenfalls clipsartige Verbindung entspricht der Verbindung, die in den Fign. 4 und 5 dargestellt ist.

### Bezugszeichen

- 1: Filtermodul
- 2: Zentralrohr
- 3: oberes Endstück
- 4,4a,4b: Filterschicht
- 5: Innenrand
- 6: Außenrand
- 7: Dorn
- 8: unteres Endstück
- 9: Zwischenelement
- 10,10a,b: erstes drainierendes Abstandselement
- 11a,b: Dichtelement
- 12a,b: Durchflußelement
- 13,13': Rastnase
- 14,14',14": Rastnase
- 15: Kontaktfläche
- 16a,b: Bügel
- 18: Durchflußkanal
- 19: Druckschulter
- 20: zweites drainierendes Abstandselement
- 21: Dichtelement
- 22: Durchflußelement
- 23,23a,b: Bügel
- 24: vertikaler Schenkel
- 25: Querschenkel
- 26: Bügelnase
- 27: Kontaktfläche
- 28,28': radialer Steg
- 29,29': kreisförmiger Steg
- 30: Gleitschräge
- 31: Gleitschräge
- 32: Druckschulter
- 33: Durchflußkanal
- 34: Rastnase
- 40: Filtrat-/Unfiltratkanal
- 41: Filtrat-/Unfiltratkanal
- 50: ringförmiges Dichtelement
- 100: Drainageelement
- 101: Nut
- 102a,b: Rastring
- 103: inneres keilförmiges Verbindungselement
- 104: obere Keilfläche
- 104a,b: obere Keilfläche
- 105: untere Keilfläche
- 106a,b: untere Keilfläche
- 107: äußeres keilförmiges Verbindungselement
- 108: obere Keilfläche
- 109: untere Keilfläche
- 118: radialer Steg
- 118': radialer Steg
- 119: kreisförmiger Steg
- 128: reduzierte Bereiche
- 130: spaltförmiger Zwischenraum
- 200: Drainageelement

## Patentansprüche

1. Filtermodul mit Filterlagen aus einem Filtermedium, insbesondere mit Filterlagen aus Filterschichten (4, 4a, 4b), die sich mit Lagen aus drainierenden Abstandselementen (10, 10a, 10b, 20) abwechseln, wobei die drainierenden Abstandselemente (10, 10a, 10b, 20) jeweils wechselseitig zum Filtrat- und Unfiltratraum (40, 41) einerseits Durchflusselemente (12a, 12b, 22) und andererseits Dichtelemente (11a, 11b, 21) aufweisen, zwischen denen Drainageelemente (100, 200) vorgesehen sind, wobei mindestens einige der Abstandselemente (10, 10a, 10b, 20) im Bereich mindestens eines Filtrat- oder Unfiltratraumes (40, 41) Verbindungsmittel aufweisen, wobei die Verbindungsmittel dieser Abstandselemente mit den Verbindungsmitteln mindestens eines weiteren Abstandselementes zusammenwirken und die drainierenden Abstandselemente (10, 10a, 10b, 20) zum abdichtenden Pressen der Filterlagen ausgebildet sind, wobei
erste drainierende und zweite drainierende Abstandselemente (10, 10a, 10b, 20) vorgesehen sind, die verschieden ausgebildet und im Filtermodul (1) abwechselnd angeordnet sind und jeweils wechselseitig zum Filtrat- und Unfiltratraum (40, 41) einerseits Durchflusselemente (12a, 12b, 22) und andererseits Dichtelemente (11a, 11b, 21) aufweisen, **dadurch gekennzeichnet, daß** die Dichtelemente (11a, 11b) und die Durchflusselemente (12a, 12b) der ersten drainierenden Abstandselemente (10a, 10b) dicker ausgebildet sind als die Dicht- und Durchflusselemente (21, 22) der zweiten drainierenden Abstandselemente (20) und
wobei zwischen den Drainageelementen (100) der ersten drainierenden Abstandselemente (10, 10a, 10b) und den benachbarten Filterlagen (4, 4a, 4b) ein spaltförmiger Zwischenraum vorgesehen ist.

2. Filtermodul nach Anspruch 1, **dadurch gekennzeichnet, daß** die Verbindungsmittel benachbarter Abstandselemente (10,10a,b,20) zusammenwirken.

3. Filtermodul nach Anspruch 1, **dadurch gekennzeichnet, daß** die Verbindungsmittel mindestens das benachbarte Abstandselement (10,10a,b,20) übergreifen und mit den Verbindungsmitteln mindestens eines der folgenden Abstandselemente (10,10a,b,20) zusammenwirken.

4. Filtermodul nach einem der Ansprüche 1 bis 3, **dadurch gekennzeichnet, daß** das Abstandselement (10,10a,b,20) ein Drainageelement (100,200), mindestens ein Dichtelement (11a,b,21) und/oder ein Durchflußelement (12a,b,22) umfaßt.

5. Filtermodul nach einem der Ansprüche 1 bis 4, **dadurch gekennzeichnet, daß** das erste Abstandselement (10) das Dichtelement (11a,b) am Innenumfang und das zweite Abstandselement (20) das Dichtelement (21) am Außenumfang aufweist.

6. Filtermodul nach einem der Ansprüche 1 bis 5, **dadurch gekennzeichnet, daß** das erste Abstandselement (10) zwischen Drainageelement (100) und Dichtelement (11a,b) sowie Durchflußelement (12a,b) jeweils ein inneres keilförmiges Verbindungselement (103) und/oder ein äußeres keilförmiges Verbindungselement (107) aufweist.

7. Filtermodul nach Anspruch 6, **dadurch gekennzeichnet, daß** die keilförmigen Verbindungselemente (103,107) mindestens eine obere Keilfläche (104,104a,104b,108) und mindestens eine untere Keilfläche (105, 106a, 106b, 109) aufweist.

8. Filtermodul nach einem der Ansprüche 1 bis 7, **dadurch gekennzeichnet, daß** das Drainageelement (100,200) mit dem Dichtelement (11a,b,21) und/oder Durchflußelement (12a,b,22) und/oder keilförmigen Verbindungselement (103,107) einstückig ausgebildet ist.

9. Filtermodul nach einem der Ansprüche 1 bis 8, **dadurch gekennzeichnet, daß** die Verbindungsmittel einstückig mit dem Abstandselement (10,10a,b,20) ausgebildet sind.

10. Filtermodul nach einem der Ansprüche 1 bis 9, **dadurch gekennzeichnet, daß** die Verbindungsmittel derartig bemessen sind, daß sie eine Zugspannung aushalten, die einem Klemmdruck für das abdichtende Pressen der Filterlagen (4a,b) zwischen 1 N/mm² und 100 N/mm², vorzugsweise 2 N/mm² bis 30 N/mm², entspricht.

11. Filtermodul nach einem der Ansprüche 1 bis 10, **dadurch gekennzeichnet, daß** die Verbindungsmittel der Abstandselemente (10,10a,b,20) kraftschlüssig zusammenwirken.

12. Filtermodul nach einem der Ansprüche 1 bis 10, **dadurch gekennzeichnet, daß** die Verbindungsmittel der Abstandselemente (10,10a,b,20) formschlüssig zusammenwirken.

13. Filtermodul nach einem der Ansprüche 1 bis 12, **dadurch gekennzeichnet, daß** die Durchflußelemente (12a,b,22) oder die Dichtelemente (11a,b,21) im Bereich des Filtrat- bzw. Unfiltratraums (40,41) die Verbindungsmittel aufweisen.

14. Filtermodul nach einem der Ansprüche 1 bis 10, 12 oder 13, **dadurch gekennzeichnet, daß** als Verbindungsmittel Bügel (16a,b,23,23a,b) vorgesehen sind, in die Rastnasen (13,13',14,14',14",34) eingreifen.

15. Filtermodul nach Anspruch 14, **dadurch gekennzeichnet, daß** die Bügel (12,13',14,14',14",34) L- oder U-förmig ausgebildet sind.

16. Filtermodul nach einem der Ansprüche 14 oder 15, **dadurch gekennzeichnet, daß** die Bügel (13,13',14,14',14",34) alternierend nach oben und unten weisend ausgebildet sind.

17. Filtermodul nach einem der Ansprüche 14 bis 16, **dadurch gekennzeichnet, daß** die Bügel (13,13',14,14',14",34) in Umfangsrichtung des Abstandselementes (10,10a,b,20) unmittelbar nebeneinander angeordnet sind.

18. Filtermodul nach einem der Ansprüche 14 bis 16, **dadurch gekennzeichnet, daß** die Bügel (13,13',14,14',14",34) in Umfangsrichtung des Abstandselementes (10,10a,b,20) mit Abstand zueinander angeordnet sind, wobei der Abstand maximal 500 mm beträgt.

19. Filtermodul nach einem der Ansprüche 1 bis 13, **dadurch gekennzeichnet, daß** als Verbindungsmittel eine an einem Abstandselement (10,10a,b,20) ausgebildete umlaufende Nut (101) und an einem anderen Abstandselement (10,10a,b,20) Rasthaken angeordnet sind, die in die Nut (101) eingreifen.

20. Filtermodul nach einem der Ansprüche 14 bis 19, **dadurch gekennzeichnet, daß** die Rasthaken und/oder Bügel (13,13',14,14',14",34) an ihrer Außenseite Gleitschrägen (30,31) aufweisen.

21. Filtermodul nach einem der Ansprüche 12 bis 20, **dadurch gekennzeichnet, daß** die Kontaktflächen (15,27) der formschlüssigen Verbindungsmittel geneigt sind.

22. Filtermodul nach einem der Ansprüche 1 bis 13, **dadurch gekennzeichnet, daß** die Verbindungsmittel der Abstandselemente (10,10a,b,20) als Hülse und eingreifender Dübel mit oder ohne Verzahnung ausgebildet sind.

23. Filtermodul nach einem der Ansprüche 1 bis 13, **dadurch gekennzeichnet, daß** die Verbindungsmittel der Abstandselemente (10,10a,b,20) beidseitig als ineinandergreifende T-förmige Rastelemente ausgebildet sind.

24. Filtermodul nach einem der Ansprüche 1 bis 13, **dadurch gekennzeichnet, daß** die Verbindungsmittel der Abstandselemente (10,10ab,20) beidseitig als ineinandergreifende pfeilförmige Rastelemente ausgebildet sind.

25. Filtermodul nach einem der Ansprüche 1 bis 13, **dadurch gekennzeichnet, daß** als Verbindungsmittel an den Abstandselementen (10,10a,b,20) umlaufende Befestigungsmittel ausgebildet sind, an denen ein das Filtermodul (1) umhüllendes Netz oder Gitter befestigt ist.

26. Filtermodul nach einem der Ansprüche 1 bis 25, **dadurch gekennzeichnet, daß** die Verbindungsmittel ausschließlich am äußeren Umfang der Abstandselemente (10,10a,b,20) vorgesehen sind.

27. Filtermodul nach einem der Ansprüche 1 bis 26, **dadurch gekennzeichnet, daß** die Verbindungsmittel sowohl am Innenumfang als auch am Außenumfang der Abstandselemente (10,10a,b,20) vorgesehen sind.

28. Filtermodul nach einem der Ansprüche 1 bis 27, **dadurch gekennzeichnet, daß** die Dichtelemente (11a,b,21) und/oder die Durchflußelemente (12a,b,22) wulstartige Verdickungen der drainierenden Abstandselemente (10,10a,b,20) sind.

## Claims

1. Filter module with filter layers of a filter medium, in particular with filter layers of filter strata (4, 4a, 4b) which alternate with layers of draining distance elements (10, 10a, 10b, 20), wherein the draining distance elements (10, 10a, 10b, 20) in each case comprise on reciprocal sides of the filtrate and non-filtrate space (40, 41) on one side flow-through elements (12a, 12b, 22) and on the other side sealing elements (11a, 11b, 21), between which drainage elements (100, 200) are provided, wherein at least some of the distance elements (10, 10a, 10b, 20) comprise connection means in the region at least of one filtrate or non-filtrate space (40, 41), wherein the connection means of these distance elements co-operate with the connection means at least of one further distance element, and the draining distance elements (10, 10a, 10b, 20) are formed for compressing the filter layers in a sealing fashion, wherein
first draining and second draining distance elements (10, 10a, 10b, 20) are provided, which elements are formed differently and disposed alternately in the filter module (1) and in each case comprise on reciprocal sides of the filtrate and non-filtrate space (40, 41) on one side flow-through elements (12a, 12b, 22) and on the other side sealing elements (11a, 11b, 21), **characterised in that** the sealing elements (11a, 11b) and the flow-through elements (12a, 12b) of the first draining distance elements (10a, 10b) are thicker than the sealing and flow-through elements (21, 22) of the second draining distance elements (20), and
wherein a gap-shaped interspace is provided between the drainage elements (100) of the first draining distance elements (10, 10a, 10b) and the adjacent filter layers (4, 4a, 4b).

2. Filter module according to Claim 1, **characterised in that** the connection means of adjacent distance elements (10, 10a, b, 20) co-operate.

3. Filter module according to Claim 1, **characterised in that** the connection means engage over at least the adjacent distance element (10, 10a, b, 20) and co-operate with the connection means at least of one of the following distance elements (10, 10a, b, 20).

4. Filter module according to any one of Claims 1 to 3, **characterised in that** the distance element (10, 10a, b, 20) comprises a drainage element (100, 200), at least one sealing element (11a, b, 21) and/or a flow-through element (12a, b, 22).

5. Filter module according to any one of Claims 1 to 4, **characterised in that** the first distance element (10) comprises the sealing element (11a, b) at the inner circumference and the second distance element (20) comprises the sealing element (21) at the outer circumference.

6. Filter module according to any one of Claims 1 to 5, **characterised in that** the first distance element (10) comprises an inner wedge-shaped connection element (103) and/or an outer wedge-shaped connection element (107), respectively, between the drainage element (100) and the sealing element (11a, b) as well as the flow-through element (12a, b).

7. Filter module according to Claim 6, **characterised in that** the wedge-shaped connection elements (103, 107) comprise at least one upper wedge face (104, 104a, 104b, 108) and at least one lower wedge face (105, 106a, 106b, 109).

8. Filter module according to any one of Claims 1 to 7, **characterised in that** the drainage element (100, 200) is formed integrally with the sealing element (11a, b, 21) and/or flow-through element (12a, b, 22) and/or wedge-shaped connection element (103, 107).

9. Filter module according to any one of Claims 1 to 8, **characterised in that** the connection means are formed integrally with the distance element (10, 10a, b, 20).

10. Filter module according to any one of Claims 1 to 9, **characterised in that** the connection means are dimensioned such that they withstand a tensile stress which corresponds to a clamping pressure for the sealing compression of the filter layers (4a, b) of between 1 N/mm² and 100 N/mm², preferably 2 N/mm² to 30 N/mm².

11. Filter module according to any one of Claims 1 to 10, **characterised in that** the connection means of the distance elements (10, 10a, b, 20) co-operate in a non-positive fashion.

12. Filter module according to any one of Claims 1 to 10, **characterised in that** the connection means of the distance elements (10, 10a, b, 20) co-operate in a positive fashion.

13. Filter module according to any one of Claims 1 to 12, **characterised in that** the flow-through elements (12a, b, 22) or the sealing elements (11a, b, 21) comprise the connection means in the region of the filtrate or non-filtrate space (40, 41).

14. Filter module according to any one of Claims 1 to 10, 12 or 13, **characterised in that** bows (16a, b, 23, 23a, b) are provided as connection means, in which bows snap-in lugs (13, 13', 14, 14', 14", 34) engage.

15. Filter module according to Claim 14, **characterised in that** the bows (12, 13, 14, 14', 14", 34) are L- or U-shaped.

16. Filter module according to either of Claims 14 and 15, **characterised in that** the bows (13, 13', 14, 14', 14", 34) are formed so as to point alternately upwards and downwards.

17. Filter module according to any one of Claims 14 to 16, **characterised in that** the bows (13, 13', 14, 14', 14", 34) are disposed directly side by side in the circumferential direction of the distance element (10, 10a, b, 20).

18. Filter module according to any one of Claims 14 to 16, **characterised in that** the bows (13, 13', 14, 14', 14", 34) are disposed at a spacing from one another in the circumferential direction of the distance element (10, 10a, b, 20), wherein the spacing is a maximum of 500 mm.

19. Filter module according to any one of Claims 1 to 13, **characterised in that** a circumferential groove (101), which is formed at a distance element (10, 10a, b, 20), and snap-in hooks at another distance element (10, 10a, b, 20) are disposed as connection means, which hooks engage in the groove (101).

20. Filter module according to any one of Claims 14 to 19, **characterised in that** the snap-in hooks and/or bows (13, 13', 14, 14', 14", 34) comprise slide slopes (30, 31) at their outside.

21. Filter module according to any one of Claims 12 to 20, **characterised in that** the contact faces (15, 27) of the positive connection means are inclined.

22. Filter module according to any one of Claims 1 to 13, **characterised in that** the connection means of the distance elements (10, 10a, b, 20) are formed as a sleeve and an engaging dowel pin with or without tooth system.

23. Filter module according to any one of Claims 1 to 13, **characterised in that** the connection means of the distance elements (10, 10a, b, 20) are formed on both sides as interlocking T-shaped snap-in elements.

24. Filter module according to any one of Claims 1 to 13, **characterised in that** the connection means of the distance elements (10, 10a, b, 20) are formed on both sides as interlocking arrow-shaped snap-in elements.

25. Filter module according to any one of Claims 1 to 13, **characterised in that** circumferential fastening means are formed as connection means at the distance elements (10, 10a, b, 20), to which fastening means a net or lattice is fastened, the latter encasing the filter module (1).

26. Filter module according to any one of Claims 1 to 25, **characterised in that** the connection means are provided solely at the outer circumference of the distance elements (10, 10a, b, 20).

27. Filter module according to any one of Claims 1 to 26, **characterised in that** the connection means are provided both at the inner circumference and at the outer circumference of the distance elements (10, 10a, b, 20).

28. Filter module according to any one of Claims 1 to 27, **characterised in that** the sealing elements (11a, b, 21) and/or the flow-through elements (12a, b, 22) are bead-like thickenings of the draining distance elements (10, 10a, b, 20).

## Revendications

1. Module filtrant comprenant des couches filtrantes formées d'un milieu filtrant, en particulier de couches filtrantes formées de strates filtrantes (4,4a,4b), qui alternent avec des couches formées d'éléments d'espacement (10,10a,10b,20) drainant, les éléments d'espacement (10, 10a,10,20) drainant présentant chacun, et de façon alternée par rapport à l'espace de filtrat et de non-filtrat (40,41), d'une part des éléments de passage (12a,12b,22), et d'autre part des éléments d'étanchéité (11a,11b,21), entre lesquels sont prévus des éléments de drain (100,200), où au moins quelques-uns des éléments d'espacement (10,10a,10b, 20), dans la zone au moins d'un espace de filtrat ou de non-filtrat (40,41), présentent des moyens de liaison, les moyens de liaison de ces moyens d'espacement coopérant avec les moyens de liaison d'au moins un autre élément d'espacement, et les éléments d'espacement (10,10a,10b,20) assurant un drainage étant réalisés pour presser, avec effet de fermeture étanche, les couches de filtre ; où
des premiers éléments d'espacement drainants et des deuxièmes éléments d'espacement drainants (10,10a,10b,20) sont prévus, de réalisation différente et sont disposés en alternance dans le module de filtre (1), et chaque fois présentent, de façon alternée par rapport à l'espace de filtrat et de non-filtrat (40,41), d'une part, des éléments de passage (10a, 12b,22) et, d'autre part, des éléments d'étanchéité (11a,11b, 21), **caractérisés en ce que** les éléments d'étanchéité (11a, 11b) et les éléments de passage (12a,12b) des premiers éléments d'espacement drainants (10a,10b) sont plus épais que les éléments d'étanchéité et de passage (21,22) des deux éléments d'espacement drainant (20,) et
entre les éléments de drain (100) des premiers éléments d'espacement drainants (10,10a,10b) et les couches de filtres (4,4a,4b) voisines, est prévu un espace intermédiaire en forme d'intervalle.

2. Module filtrant selon la revendication 1, **caractérisé en ce que** les moyens de liaison d'éléments d'espacement (10, 10a,b,20) voisins coopèrent.

3. Module filtrant selon la revendication 1, **caractérisé en ce que** les moyens de liaison entourent au moins l'élément d'espacement (10,10a,b,20) voisins et coopèrent avec les moyens de liaison d'au moins l'un des éléments d'espacement (10,10a,b,20) suivants.

4. Module filtrant selon l'une des revendications 1 à 3, **caractérisé en ce que** l'élément d'espacement (10,10a,b, 20) comprend un élément de drain (100,200), au moins un élément d'étanchéité (11a,b,21) et/ou un élément de passage (12a,b,22).

5. Module filtrant selon l'une des revendications 1 à 4, **caractérisé en ce que** le premier élément d'espacement (10) présente l'élément d'étanchéité (11a,b) sur la périphérie intérieure, et le deuxième élément d'espacement (20) présente l'élément d'étanchéité (21) sur la périphérie extérieure.

6. Module filtrant selon l'une des revendications 1 à 5, **caractérisé en ce que** le premier élément d'espacement (10) présente, entre l'élément de drain (100) et l'élément d'étanchéité (11a,b), ainsi que l'élément de passage (12a,b), chaque fois un élément de liaison intérieur (103) cunéiforme et/ou un élément de liaison extérieur (107) cunéiforme.

7. Module filtrant selon la revendication 6, **caractérisé en ce que** les éléments de liaison (103,107) cunéiformes présentent au moins une face de coin supérieure (104,104a,104b,108) et au moins une face de coin inférieure (105,106a,106b,109).

8. Module filtrant selon l'une des revendications 1 à 7, **caractérisé en ce que** l'élément de drain (100,200) est réalisé d'une seule pièce avec l'élément d'étanchéité (11a,b,21) et/ou l'élément de passage (12a,b,22) et/ou l'élément de liaison (103,107) cunéiforme.

9. Module filtrant selon l'une des revendications 1 à 8, **caractérisé en ce que** les moyens de liaison sont réalisés d'une seule pièce avec l'élément d'espacement (10,10a,b,20).

10. Module filtrant selon l'une des revendications 1 à 9, **caractérisé en ce que** les moyens de liaison dont de dimensions telles qu'ils entretiennent une contrainte de traction correspondant à une pression de serrage pour le pressage à effet d'étanchéité des couches de filtre (4a,b), entre 1N/mm² et 100N/mm², de préférence, 2N/mm² à 30N/mm² .

11. Module filtrant selon l'une des revendications 1 à 10, **caractérisé en ce que** les moyens de liaison des éléments d'espacement (10,10a,b,20) coopèrent par une liaison à interaction de forces.

12. Module filtrant selon l'une des revendications 1 à 10, **caractérisé en ce que** les moyens de liaison des éléments d'espacement (10,10a,b,20) coopèrent avec une liaison à ajustement de forme.

13. Module filtrant selon l'une des revendications 1 à 12, **caractérisé en ce que** les éléments de passage (12a,b,22) ou les éléments d'étanchéité (11a,b,21) présentent les moyens de liaison dans la zone de l'espace de filtrat ou de non-filtrat (40,41).

14. Module filtrant selon l'une des revendications 1 à 10, 12 ou 13, **caractérisé en ce que** sont prévus en tant que moyens de liaison des étriers (16a,b,23,23a,b), dans lesquels s'engagent des ergots d'encliquetage (13, 13', 14, 14', 14", 34).

15. Module filtrant selon la revendication 14, **caractérisé en ce que** les étriers (12,13',14,14',14",34) sont en forme de L ou de U.

16. Module filtrant selon l'une des revendications 14 ou 15, **caractérisé en ce que** les étriers (13,13',14,14',14",34) sont réalisés en alternance en étant tournés vers le haut et vers le bas.

17. Module filtrant selon l'une des revendications 14 à 16, **caractérisé en ce que** les étriers (13,13',14,14',14",34) sont disposés directement les uns à côté des autres en direction périphérique de l'élément d'espacement (10, 10a,b,20).

18. Module filtrant selon l'une des revendications 14 à 16, **caractérisé en ce que** les étriers (13,13',14,14',14",34) sont disposés à distance les uns des autres dans la direction périphérique de l'élément d'espacement (10, 10,a,b,20), la distance d'espacement étant au maximum de 500 mm.

19. Module filtrant selon l'une des revendications 1 à 13, **caractérisé en ce que** sont disposés, en tant que moyens de liaison, une gorge de pourtour (101), réalisée sur un élément d'espacement (10,10a,b,20), et sur un autre élément d'espacement (10,10a,b,20) sont disposés des crochets d'encliquetage s'engageant dans la gorge (101)

20. Module filtrant selon l'une des revendications 14 à 19, **caractérisé en ce que** les crochets d'encliquetage et/ou les étriers (13,13',14,14',14",34) présentent sur leur face extérieure des chanfreins de glissement (30,31)

21. Module filtrant selon l'une des revendications 12 à 20, **caractérisé en ce que** les faces de contact (15,27) des moyens de liaison, à ajustement de forme, sont inclinées.

22. Module filtrant selon l'une des revendications 1 à 13, **caractérisé en ce que** les moyens de liaison des éléments d'espacement (10,10a,b,20) sont réalisés sous la forme de douille et de cheville à engagement, avec ou sans denture.

23. Module filtrant selon l'une des revendications 1 à 13, **caractérisé en ce que** les moyens de liaison des éléments d'espacement (10,10a,b,20) sont réalisés de part et d'autre sous forme d'éléments d'encliquetage en forme de T, s'engageant les uns dans les autres.

24. Module filtrant selon l'une des revendications 1 à 13, **caractérisé en ce que** les moyens de liaison des éléments d'espacement (10,10a,b,20) sont réalisés de part et d'autre sous forme d'éléments d'encliquetage en forme de pointes de flèches, s'engageant les uns dans les autres.

25. Module filtrant selon l'une des revendications 1 à 13, **caractérisé en ce que** sont réalisés des moyens de fixation circulaires, faisant office de moyens de liaison sur les éléments d'espacement (10,10a,b,20), moyens de fixation sur lesquels est fixé un filet ou une grille, assurant un enveloppement du module filtrant (1).

26. Module filtrant selon l'une des revendications 1 à 25, **caractérisé en ce que** les moyens de liaison sont exclusivement prévus sur la périphérie extérieure des éléments d'espacement (10,10a,b,20).

27. Module filtrant selon l'une des revendications 1 à 26, **caractérisé en ce que** les moyens de liaison sont prévus, tant sur la périphérie intérieure, que sur la périphérie extérieure des éléments d'espacement (10, 10a,b,20)

28. Module filtrant selon l'une des revendications 1 à 27, **caractérisé en ce que** les éléments d'étanchéité (11a,b,21) et/ou les éléments de passage (12a,b,22) sont des épaississements, en forme de bourrelets, des éléments d'espacement drainants (10,10a,b,20).
